# EUROPÄISCHE PATENTSCHRIFT

(11) **EP 0 709 557 B1**
(45) Veröffentlichungstag und Bekanntmachung des Hinweises auf die Patenterteilung: **20.01.1999**
(21) Anmeldenummer: 95115627.2
(22) Anmeldetag: 04.10.1995
(51) Int. Cl.: F01N 7/10, F01N 3/34

(54) **Vorrichtung zum Einblasen von Luft in ein Abgasrohr**
Device for blowing air in an exhaust pipe
Dispositif de soufflage d'air dans un tuyau d'échappement

(30) Priorität: 27.10.1994 DE 4438401
(43) Veröffentlichungstag der Anmeldung: 01.05.1996
(73) Patentinhaber: Friedrich Boysen GmbH & Co. KG, D-72213 Altensteig (DE); Bayerische Motoren Werke Aktiengesellschaft, 80788 München (DE)
(72) Erfinder: Diez, Rainer, D-72202 Nagold (DE); Hartmann, Friedrich, D-72218 Wildberg (DE); Jelinek, Hans-Peter, D-85302 Gerolsbach (DE); Albrecht, Florian, D-85716 Unterschleissheim (DE)
(74) Vertreter: Manitz, Finsterwald & Partner

(56) Entgegenhaltungen:
- DE-A- 4 214 796
- DE-A- 4 313 091
- DE-U- 8 914 153

## Beschreibung

Die Erfindung betrifft eine Vorrichtung zum Einblasen von Luft bzw. Sekundärluft in wenigstens ein Abgasrohr eines Abgasstranges oder eines Abgasrohrkrümmers eines Motors mit innerer Verbrennung, mit einem das Abgasrohr bzw. den Abgasrohrkrümmer am Motor haltenden Flansch, an dessen vom Motor abgewandter Seite eine mit dem Eingang des Abgasrohres bzw. wenigstens eines der Abgasrohre durch einen Luftkanal verbundene Öffnung zur Anbringung einer Luftleitung ausgebildet ist.

Der Abgasstrang bzw. Abgasrohrkrümmer eines üblichen Verbrennungsmotors in Kraftfahrzeugen ist motorseitig mit einem Flansch am Ventilkopf des Motors angeordnet. Bei mehrzylindrigen Motoren besitzt der Abgasstrang motorseitig eine der Zahl der Zylinder entsprechende Anzahl von Abgasrohren, von denen dann jeweils mehrere, in der Regel unter Bildung eines sogenannten Abgasrohrkrümmers, in ein Abgassammelrohr zusammengeführt sind. Um die Schadstoffmenge in den Abgasen zu vermindern bzw. um für einen im Abgasstrang angeordneten Katalysator zur katalytischen Zerlegung schädlicher Bestandteile des Abgases optimale Betriebsbedingungen zu schaffen, ist es bekannt, in den Abgasstrom sogenannte Sekundärluft einzublasen. Dadurch wird unter anderem eine Nachverbrennung von Abgasbestandteilen sowie eine Erhöhung der Abgastemperatur möglich. Insbesondere wird das "Ansprechverhalten" des Katalysators verbessert.

Aus der DE 89 14 153.9 U1 ist eine Vorrichtung zum Einblasen von Luft der eingangs genannten Art bekannt. Bei dieser Vorrichtung besteht der Flansch, welcher den Abgasrohrkrümmer am Zylinderkopf des Motors hält, aus mehreren aufeinander gelegten Platten, die miteinander verlötet sind. In dem Flansch sind den Abgasleitungen des Zylinderkopfes zugeordnete Durchgangsöffnungen vorgesehen, die sich durch alle Platten des Flansches erstrecken. In diese Durchgangsöffnungen ist jeweils eine Hülse eingesetzt, die mit den Platten fest verbunden ist und zur Halterung eines Abgasrohrs dient, das in die Hülse eingeschoben und mit ihre verschweißt ist.

Um den Abgasströmen der einzelnen Zylinder des Motors Sekundärluft zuführen zu können, ist in der mittleren Platte des Flansches ein Kanalsystem ausgestanzt. Dieses umfaßt einen Verteilerraum, in den eine Luftleitung mündet, und von dem Verteilerrohr ausgehende Kanalabschnitte, die weiter zu Teilkanälen führen, welche die Durchgangsöffnungen in dem Flansch umgeben und mit dem Inneren der Hülsen durch in den Hülsen vorgesehene Durchbrüche verbunden sind.

Bei dieser Vorrichtung wird häufig als nachteilig empfunden, daß sie in konstruktiver und herstellungstechnischer Hinsicht kompliziert und aufwendig ist, da die Platten des Flansches sowie die Hülsen zur Halterung der Abgasrohre an dem Flansch einzeln hergestellt und miteinander verlötet bzw. verschweißt werden müssen.

Die DE 42 14 796 A1 zeigt einen Auspuffkrümmer mit Sekundärluftanlage, bei welchem in den Motorflansch des Auspuffkrümmers ein Stahlrohr eingegossen ist, in welches die Luftzuführungs- und Luftverteilungskanäle durch das das Stahlrohr umgebende Gußmaterial münden. Diese Ausgestaltung ist ebenfalls aufwendig in der Herstellung.

Aufgabe der Erfindung ist es demgemäß, eine Vorrichtung zum Einblasen von Luft bzw. Sekundärluft der eingangs genannten Art zu schaffen, die einfach im Aufbau und preiswert in der Herstellung ist.

Diese Aufgabe ist erfindungsgemäß dadurch gelöst, daß der Luftkanal als parallel zur Fläche des Flansches verlaufende Nut in der motorseitigen Fläche des Flansches ausgebildet ist.

Durch die erfindungsgemäße Ausbildung zwischen dem Flansch und dem entsprechenden Gegenflansch am Zylinderkopf ist der Grundaufbau des Flansches sowie die Konstruktion der Abgasrohre und deren Anschluß am Flansch unabhängig davon, ob Luft in den Abgasstrang eingeblasen werden soll oder nicht. Beispielsweise kann als Flansch einfacherweise eine Flanschleiste verwendet werden, die genauso ausgebildet ist wie bei einer Anordnung ohne Lufteinblasung.

Wenn der Flansch für einen Abgasstrang mit Luftzuführung verwendet werden soll, brauchen lediglich eine Öffnung zum Anschluß einer Luftleitung und außerdem der Luftkanal hergestellt zu werden. Der hierfür notwendige Aufwand ist jedoch außerordentlich gering.

Die erfindungsgemäße Vorrichtung hat des weiteren den Vorteil, daß der Luftkanal durch die ohnehin zwischen dem Flansch und dem motorseitigen Gegenflansch vorhandene Dichtung abgedichtet ist. Außerdem können bei dieser Ausbildung die selben Schrauben verwendet werden wie bei einer Anordnung ohne Lufteinblasung. Schließlich ist es von Vorteil, daß bei dieser Ausführungsform zur Herstellung von Öffnung und Luftkanal lediglich ein Bohr- und ein Fräsvorgang erforderlich sind und somit die Bearbeitung der Flansche auf einfache Weise durch Bohr- und Fräsautomaten erfolgen kann, was die Massenfertigung unterstützt.

Die Ausbildung des Luftkanals zwischen dem Flansch und der Motoraußenseite bietet außerdem den Vorteil, daß der Luftkanal direkt an dem Eingang des Abgasrohres endet, so daß es nicht erforderlich ist, das Abgasrohr bzw. den Anschluß des Abgasrohres an dem Flansch in besonderer Weise auszubilden.

Gemäß einer besonders zweckmäßigen Ausführungsform der Erfindung ist vorgesehen, daß im Flanschteil der Luftleitung angeordnete Befestigungslöcher deckungsgleich zu Befestigungslöchern des Flansches sind, so daß Flansch und Flanschteil mit gemeinsamen Bolzen, Stiften oder dergleichen am Motor montierbar sind.

Hierbei ist zweckmäßigerweise vorgesehen, im Flansch auf der vom Motor abgewandten Seite eine Ausnehmung für das Flanschteil der Luftleitung anzuordnen und dessen Dicke im Bereich der Befestigungslöcher der Tiefe der Ausnehmung anzupassen, derart, daß für die gemeinsamen Befestigungslöcher von Flansch und Flanschteil gleiche Bolzen, Stifte od.dgl. wie für die übrigen Befestigungslöcher des Flansches verwendbar sind.

Bei entsprechender Ausbildung der Form der Ausnehmung und des Flanschteiles kann sichergestellt werden, daß sich die Luftleitung nur in richtiger Position am Flansch montieren läßt.

Grundsätzlich besteht bei allen Ausführungsformen die Möglichkeit, den Flansch des Abgasrohres bzw. des Abgasrohrkrümmers auch dann für die Anordnung einer Luftleitung auszubilden, wenn eine solche nicht angeordnet werden soll. In diesem Falle kann die flanschseitige Öffnung des Luftkanales durch eine flanschartige Abdeckplatte od.dgl. verschlossen werden, die sich in grundsätzlich gleicher Weise wie die Luftleitung bzw. deren Flanschteil am Flansch montieren läßt.

In der Regel wird die Luftleitung am Flansch mittig zwischen zwei Abgasrohren angeordnet, so daß bei entsprechender Ausbildung des Luftkanales Luft in die Eingänge beider Abgasrohre eingeblasen werden kann.

Unter Festigkeitsgesichtspunkten hat sich als vorteilhaft herausgestellt, wenn der Flansch zwischen zwei Abgasrohren vier in Form eines Quadrates oder Rechteckes angeordnete Befestigungslöcher zur Halterung am Motor aufweist und das Flanschteil der Luftleitung zwei Befestigungslöcher besitzt, die zwei einander diagonal gegenüberliegende Befestigungslöcher des Flansches überdecken.

Im übrigen wird hinsichtlich bevorzugter Merkmale der Erfindung auf die Ansprüche sowie die nachfolgende Erläuterung einer besonders bevorzugten Ausführungsform verwiesen, die anhand der Zeichnung dargestellt wird.

Dabei zeigt
- Fig. 1: eine Ansicht der Motorseite eines Abgasrohrkrümmers mit erfindungsgemäß angeordneter Luftleitung und

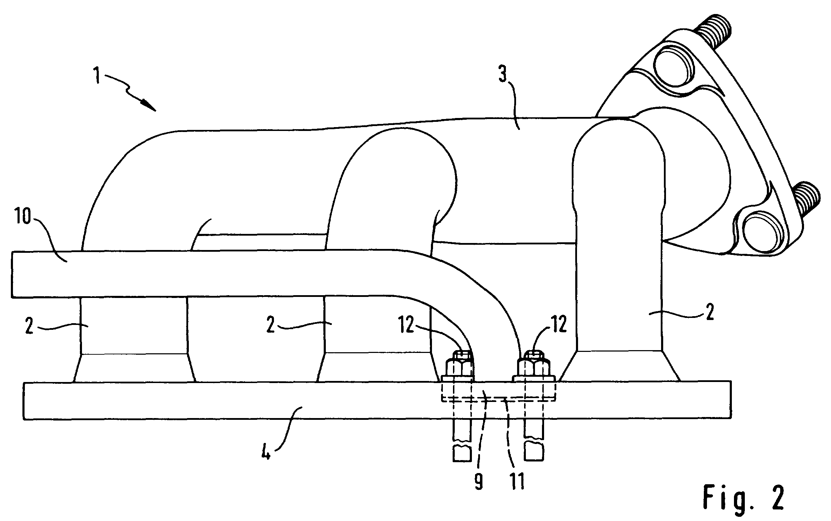

- Fig. 2: eine Ansicht entsprechend dem Pfeil II in Fig. 1.

Der in der Zeichnung dargestellte Abgasrohrkrümmer 1 dient zur Anordnung an einer nicht dargestellten Zylinderreihe mit drei Zylindern eines Verbrennungsmotors und besitzt dementsprechend drei Abgasrohre 2, die in grundsätzlich bekannter Weise in ein gemeinsames Sammelrohr 3 einmünden. Die motorseitigen Enden der Abgasrohre 2 sind in ebenfalls herkömmlicher Weise mit einem gemeinsamen Flansch 4 verbunden, welcher zur Befestigung des Abgasrohrkrümmers 1 am Motor dient.

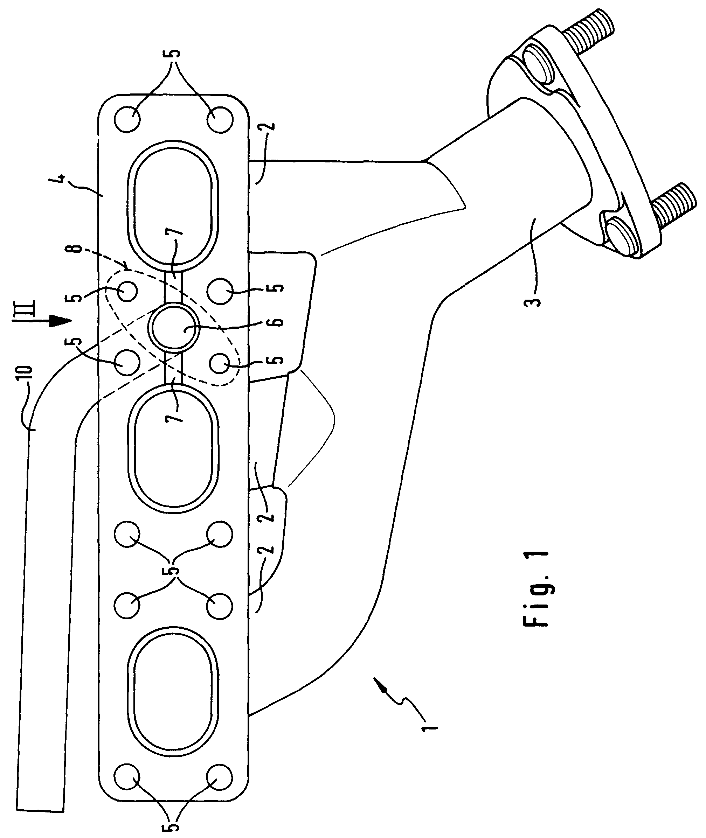

In Fig. 1 sind die beispielsweise oval geformten Eingänge der Abgasrohre 2 am Flansch 4 sowie die Befestigungslöcher 5 des Flansches 4 erkennbar, welche an jeder Eingangsöffnung eines der Abgasrohre 2 nach Art eines Rechteckes angeordnet sind, so daß zwischen zwei Abgasrohren 2 jeweils vier annähernd nach Art eines Quadrates angeordnete Befestigungslöcher 5 vorhanden sind.

Zwischen zwei Abgasrohren 2 besitzt der Flansch 4 eine Bohrung bzw. Öffnung 6, die auf der Motorseite des Flansches 4 mit einer dort im Flansch 4 ausgebildeten Nut 7 kommuniziert, die an ihren von der Bohrung bzw. Öffnung 6 entfernten Enden in die Öffnungen des Flansches 4 für die der Bohrung bzw. Öffnung 6 benachbarten Abgasrohre 2 übergeht.

Auf der vom Motor abgewandten Seite des Flansches 4 ist eine die Bohrung bzw. Öffnung 6 sowie zwei einander diagonal gegenüberliegende, zur Bohrung bzw. Öffnung 6 benachbarte Befestigungslöcher 5 überdeckende Ausnehmung 8 angeordnet, in die ein Flanschteil 9 einer rohrförmigen Luftleitung 10 Paßt. Das Flanschteil 9 ist in der Ausnehmung 8 unter Zwischenschaltung einer Dichtung 11 angeordnet und besitzt zwei mit den Befestigungslöchern 5 innerhalb der Ausnehmung 8 deckungsgleiche Befestigungslöcher, so daß die zur Befestigung des Flansches 4 am Motor dienenden Stiftschrauben 12 od. dgl. auch die Halterung des Flanschteiles 9 und damit der Luftleitung 10 übernehmen können.

Die Dicke des Flanschteiles 9 ist zumindest im Bereich der genannten Befestigungslöcher 5 der Tiefe der Ausnehmung 8 angepaßt, derart, daß die zur gemeinsamen Befestigung von Flanschteil 9 und Flansch 4 dienenden Stiftschrauben 12 eine völlig gleichartige Ausbildung und Länge wie die übrigen, lediglich zur Halterung des Flansches 4 am Motor dienenden Stiftschrauben aufweisen können.

Nach Anordnung des Abgasrohrkrümmers 1 am Motor bilden die öffnung 6 und die Nut 7 einen mit der Luftleitung 10 verbundenen Luftkanal, über den durch die Luftleitung 10 zugeführte Luft in die der Bohrung bzw. Öffnung 6 benachbarten Abgasrohre 2 eingeblasen werden kann.

In der Regel genügt es, wenn die Luft bzw. Sekundärluft lediglich einem Teil der Abgasrohre 2 zugeführt wird.

Grundsätzlich ist es jedoch möglich, am Flansch 4 mehrere Luftleitungen 10 sowie Bohrungen bzw. Öffnungen 6 und Nuten 7 anzuordnen, derart, daß sich in sämtliche Abgasrohre 2 Luft einblasen läßt.

## Patentansprüche

1. Vorrichtung zum Einblasen von Luft bzw. Sekundärluft in wenigstens ein Abgasrohr (2) eines Abgasstranges oder eines Abgasrohrkrümmers eines Motors mit innerer Verbrennung, mit einem das Abgasrohr (2) bzw. den Abgasrohrkrümmer am Motor haltenden Flansch (4), an dessen vom Motor abgewandter Seite eine mit dem Eingang des Abgasrohres (2) bzw. wenigstens eines der Abgasrohre (2) durch einen Luftkanal (7) verbundene Öffnung (6) zur Anbringung einer Luftleitung (10) ausgebildet ist,
dadurch **gekennzeichnet**,
daß der Luftkanal als parallel zur Fläche des Flansches (4) verlaufende Nut (7) in der motorseitigen Fläche des Flansches (4) ausgebildet ist.

2. Vorrichtung nach Anspruch 1,
dadurch **gekennzeichnet**,
daß die Luftleitung (10) mittels eines gesonderten Flanschteiles (9) am Flansch (4) anbringbar bzw. angeordnet ist.

3. Vorrichtung nach Anspruch 1 oder 2,
dadurch **gekennzeichnet**,
daß im Flanschteil (9) angeordnete Befestigungslöcher deckungsgleich zu Befestigungslöchern (5) des Flansches (4) sind, so daß Flansch (4) und Flanschteil (9) mit gemeinsamen Bolzen, Stiften (12) oder dergleichen am Motor montierbar sind.

4. Vorrichtung nach einem der Ansprüche 1 bis 3,
dadurch **gekennzeichnet**,
daß im Flansch (4) auf der vom Motor abgewandten Seite eine Ausnehmung (8) für das Flanschteil (9) angeordnet und dessen Dicke im Bereich der Befestigungslöcher der Tiefe der Ausnehmung (8) angepaßt ist, derart, daß für die gemeinsamen Befestigungslöcher von Flansch (4) und Flanschteil (9) gleiche Bolzen, Stifte (12) und dergleichen wie für die übrigen Befestigungslöcher (5) des Flansches (4) verwendbar sind.

5. Vorrichtung nach Anspruch 3 oder 4,
dadurch **gekennzeichnet**,
daß am Flansch (4) zwischen zwei Abgasrohren (2) jeweils vier Befestigungslöcher (5) nach Art eines Rechteckes oder Quadrates angeordnet sind und daß die Befestigungslöcher des Flanschteiles (9) zwei einander diagonal gegenüberliegende Befestigungslöcher (5) überdecken.

## Claims

1. Apparatus for the blowing of air or secondary air into at least one exhaust gas tube (2) of an exhaust gas system or of an exhaust gas manifold of an engine with internal combustion, comprising a flange (4) for securing the exhaust gas tube (2) or the exhaust gas manifold to the engine, with an opening (6) for the attachment of an air line (10) being formed at the side of the flange remote from the engine and being connected to the inlet of the exhaust gas tube (2) or of at least one of the exhaust gas tubes (2) by an air passage (7), characterized in that the air passage is formed in the engine side surface of the flange (4) as a groove (7) extending parallel to the surface of the flange (4).

2. Apparatus in accordance with claim 1, characterized in that the air line (10) can be attached or arranged on the flange (4) by means of a separate flange part (9).

3. Apparatus in accordance with claim 1 or claim 2, characterized in that attachment holes arranged in the flange part (9) are congruent to attachment holes (5) of the flange (4), so that the flange (4) and the flange part (9) can be installed on the engine with the same bolts, pins (12) or the like.

4. Apparatus in accordance with one of the claims 1 to 3, characterized in that a recess (8) for the flange part (9) is arranged in the flange (4) at the side remote from the engine, with the thickness of the flange part (9) in the region of the attachment holes being matched to the depth of the recess (8) in such away that the same bolts, pins (12) and the like as are used for the remaining attachment holes (5) of the flange (4) can be used for the common attachment holes of the flange (4) and the flange part (9).

5. Apparatus in accordance with claim 3 or claim 4, characterized in that four mounting holes (5) are provided in each case at the flange (4) between two exhaust gas tubes (2) in the manner of a rectangle or square and in that the attachment holes of the flange part (9) cover over two diametrically oppositely disposed attachment holes (5).

## Revendications

1. Dispositif destiné à l'injection d'air ou d'air secondaire dans au moins un tuyau (2) de gaz d'échappement d'un système de gaz d'échappement ou d'une pipe de gaz d'échappement d'un moteur à combustion interne, comportant une bride (4) qui retient le tuyau (2) de gaz d'échappement ou la pipe de gaz d'échappement sur le moteur et sur l'extrémité, opposée au moteur, de laquelle est pratiquée une ouverture (6) qui est reliée par l'intermédiaire d'un canal d'air (7) à l'entrée du tuyau (2) de gaz d'échappement ou à l'un au moins des tuyaux (2) de gaz d'échappement et qui est destinée à la mise en place d'une conduite d'air (10),
caractérisé en ce que
le canal d'air est réalisé dans la surface de la bride (4) située du côté du moteur en tant que rainure (7) s'étendant parallèlement à la surface de la bride (4).

2. Dispositif selon la revendication 1,
caractérisé en ce que
la conduite d'air (10) peut être fixée ou est disposée sur la bride (4) au moyen d'un élément de bride (9) séparé.

3. Dispositif selon la revendication 1 ou 2,
caractérisé en ce que
des trous de fixation pratiqués dans l'élément de bride (9) coïncident avec des trous de fixation (5) de la bride (4), de sorte que la bride (4) et l'élément de bride (9) peuvent être montés sur le moteur avec les mêmes boulons, goujons (12) ou analogues.

4. Dispositif selon l'une quelconque des revendications 1 à 3,
caractérisé en ce que
un évidement (8) pour l'élément de bride (9) est pratiqué dans la bride (4) du coté opposé au moteur, et en ce que, dans la zone des trous de fixation, l'épaisseur de cet élément est adaptée à la profondeur de l'évidement (8), de façon à pouvoir utiliser pour les trous de fixation communs de la bride (4) et de l'élément de bride (9) les mêmes boulons, goujons (12) et analogues que pour les autres trous de fixation (5) de la bride (4).

5. Dispositif selon la revendication 3 ou 4,
caractérisé en ce que
la bride (4) comporte quatre trous de fixation (5) positionnés en forme de rectangle ou de carré entre deux tuyaux (2) de gaz d'échappement, et en ce que les trous de fixation de l'élément de bride (9) coïncident avec deux trous de fixation (5) situés diagonalement l'un en face de l'autre.
